# EUROPEAN PATENT SPECIFICATION

(11) **EP 1 044 611 B1**
(45) Date of publication and mention of the grant of the patent: **31.07.2002**
(21) Application number: 00303011.1
(22) Date of filing: 10.04.2000
(51) Int. Cl.: A22B 3/02, A22B 5/00

(54) **Pithing rod and seal therefor**
Schlachtstab und Dichtung
Tige pour abattre un animal et dispositif d'étanchéité pour cette tige

(30) Priority: 13.04.1999 GB 9908450
(43) Date of publication of application: 18.10.2000
(73) Proprietor: UNIVERSITY OF BRISTOL, Clifton Bristol BS8 1TH (GB)
(72) Inventor: Butterworth, Andrew, Claverham, Bristol BS49 4LH (GB)
(74) Representative: Beck, Simon Antony

(56) References cited:
- EP-A- 0 471 470
- LEACH: "Observations on the physiological effects of pithing cattle at slaughter" MEAT SCIENCE, vol. 15, 1985, pages 101-106, XP002142354

## Description

The present invention relates to a pithing rod and to a seal for such a pithing rod.

Farm animals may be slaughtered at an abattoir or may be killed on the farm as a "casualty slaughter". This particularly applies to cattle, sheep and pigs. Typically, the vet or slaughter man has used a captive bolt stunning device to fire a captive bolt into the skull of the animal. Such devices punch a hole into the animal's head and the diameter of the hole is remarkably consistent. The captive bolt stunning device renders the animal unconscious immediately, but does not necessarily kill it. A secondary method is then required to bring about the insensible animal's death. This has typically involved exsanguination (bleeding to death) or pithing (the destruction of nervous tissue).

The use of the captive bolt inherently damages the integrity of the animal's head and this is perceived as a potential health risk as animal tissue infected with the bovine spongiform encephalopathy (BSE) agent may escape and thereby carry a risk of contamination to humans or other animals. Exsanguination of casualty animals on the farm, and of animals that are slaughtered and destined for complete incineration, has raised concern due to the potential for dissemination of blood, and also due to the commercial complication of weight loss associated with the exsanguination progress.

It is known, in slaughter houses which use the captive bolt stunning device, to insert a long rod through the bolt hole in the animal's skull and to direct the rod down through the brain stem and upper portion of the spinal cord such that, on repeated movement of the rod, the distal end of the rod damages the nervous tissue of the animal ensuring that is dead. It is advantageous, when dealing with cattle, to destroy the upper portion of the spinal cord since this region produces reflexes which cause the legs of the animal to move after stunning.

According to a first aspect of the present invention, there is provided a pithing rod, the rod including a seal for forming a substantially fluid type seal between the rod and an animal's head.

It is thus possible to provide a pithing rod which can be left with the animal carcass in order to prevent the nervous tissue of the animal or contaminated blood escaping through the hole formed by use of the penetrative stunning apparatus.

Preferably the seal comprises a region of increased diameter, such as a washer or shoulder surrounding a shaft of the pithing rod or a flange at the end thereof, which in use, abuts against the flesh of the animal's skull. Additionally or alternatively the seal may have a frustro-connical, tapered, stepped or ridged cross section in order to facilitate insertion into, and sealing engagement with, the animal's skull. Advantageously the seal is formed of an elastomeric material, such as a soft plastic or a rubber or a foamed material, in order that it can adapt to, and seal against, the contours in the animal's head and/or imperfections in the bolt hole in the animal's skull.

The seal may be formed as an integral part of the pithing rod. However, due to the desire to form a good seal whilst having a pithing rod which itself may be burnt or otherwise rendered, the seal may be formed as a separate element which is secured to the rod prior to use. Thus, for example, the pithing rod and seal may be formed of plastics material such as high density polyurethane or polypropylene. However, in an alternative arrangement the body of the rod may be made of wood and the seal may be an elastomeric element positioned around, and attached to, the pithing rod prior to use.

Advantageously the pithing rod includes retaining means for retaining it within the animal's skull. The rod may be retained by forming a helical thread around the periphery of the rod such that the thread engages with the animal's skull to hold the rod in position. Alternatively, resiliently deformable elements, in the form of fingers, barbs or circularly symmetric elements may be disposed around the rod such that these engagement elements become collapsed as the rod is inserted into the skull, and then they expand once inserted to prevent removal of the rod from the skull. Alternatively hinged elements, such as toggles, may be disposed along the axis of the rod such that they remain in line with the longitudinal axis of the rod during insertion, but then tilt to lie inclined with respect to the longitudinal axis so as to prevent removal of the rod from the skull. Such an arrangement is particularly preferred because, once the rod has been sufficiently far inserted, only unidirectional motion of the pithing rod is then permitted, thereby preventing the rod from being extracted and reused. Advantageously, the engaging means permitting the unidirectional motion become engaged with the skull before the distal end of the pithing rod has reached the uppermost portion of the spinal cord. Thus once the rod is moved into an operative position for destroying the upper portion of the spinal cord, it cannot be removed from the animal. Alternatively, the rod may frictionally engage with the skull of the animal, thereby ensuring that the seal remains compressed to prevent leakage of animal tissue from the carcass. However, it will be appreciated that such an arrangement does not ensure that the rod can only be used once.

The distance between the top of the skull and the brain stem and upper portion of the spinal cord of an animal depends on the type of animal, ie whether the animal is bovine, ovine or porcine, the animal's age and its gender. Advantageously, a single pithing rod can be supplied to fit all animals irrespective of their type, age and gender. In order to do this, the rod must be long enough in order to reach into the relevant portions of a large animal, such as a mature bull whilst also being able to cope with much smaller animals and having the retaining portion of the rod engaging with the top of the skull in order that the rod cannot be removed. In order to overcome this range of sizes, the pithing rod advantageously has a shank into which a series of notches, wasted portions or markers are formed. These enable the operator to select the required length of rod, and in the case of notches or wasted portions, also weaken the rod so that it may more easily be broken in the vicinity of the notch.

Preferably the pithing rod is provided with handle in order to make it easier for an operative to grasp the rod and to insert it into the animal's head, and then to move the rod with respect to the head in order to damage the nervous tissue. The handle is formed at a proximal end of the rod, and is bounded by the seal in order to prevent the operator's hand from inadvertently moving off the handle and further down the rod where it might come into physical contact with the animal's nervous tissue. Advantageously the handle has an attachment region, such as an eye or a hook formed thereon to facilitate mechanical lifting and subsequent processing of the head. Advantageously the handle or proximal end of the rod contains a region suitable for the display of data, such as alphanumeric characters, a bar code, or for insertion of a transponder such that the rod carries means of identification.

According to a second aspect of the present invention, there is provided a sealing element for use with a pithing rod, the sealing element comprising a channel for accepting the shaft of the pithing rod and for forming a substantially fluid type seal therewith, and a sealing portion for engaging with an animal's head to form a seal therewith.

The present invention will further be described, by way of example, with reference to the accompanying drawings, in which:
Figure 1 schematically illustrates a pithing rod constituting a first embodiment of the present invention; and
Figure 2 schematically illustrates a sealing element for use with a pithing rod, and constituting a further embodiment of the present invention.

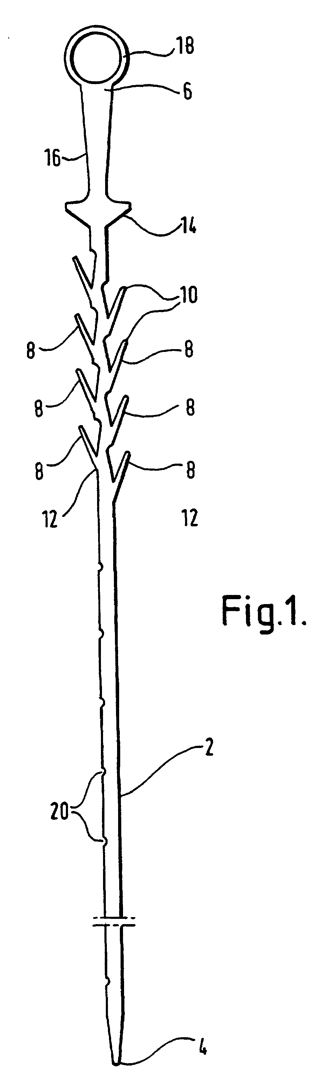

The pithing rod shown in Figure 1 comprises a long shaft 2 having a distal end 4 and a proximal end 6. The shaft 2 also has formed thereon a series of resilient fingers 8 which extend from either side of the shaft and are inclined with respect thereto. Tips 10 of the fingers are disposed towards the proximal end 6 of the pithing rod whereas bases 12 of the fingers, where they join the shaft 2, are located towards the distal end 4 of the pithing rod. A seal 14 in the form of a frustro-conical portion encircles the shaft 2 at a position adjacent the most proximally disposed fingers 10. A handle 16 is provided intermediate the seal 14 and the proximal end 6 in order to facilitate gripping of the shaft and to protect the user's hand from slipping onto regions of the pithing rod which, in use, become exposed to nervous tissue. An eye 18 is provided adjacent or within the handle 16 in order to facilitate handling.

In use, the animal to be slaughtered is first stunned with a known penetrative stunning device which forms a hole, having a diameter of approximately 11 mm in the skull of the animal. The diameter of the pithing rod is selected such that it can pass through the hole in order that the distal end 4 can be guided through the animal's brain stem and into the uppermost portion of its spinal cord. In order to accommodate the changes in sizes between animals, the shaft 2 is provided with a series of notches 20 which allows the user to quickly select the length of shaft required, based on previous experience or a look up table, and to cut the shaft to an appropriate length, or to break it by relying on the fact that the shaft will be physically weaker in the vicinity of the notch than at other portions thereof. During insertion of the pithing rod, the fingers 8 start to pass through the hole in the animal's skull. This initially causes the fingers to be bent so as to lie substantially parallel to the longitudinal axis of the pithing rod or at least to reduce the effective width of the rod. Once a finger passes clear of the hole in the animal's skull, it springs back to its inclined position, thereby preventing extraction of the rod. The fingers are formed over an elongated portion of the rod in order to facilitate use of the single rod between the varying types of animal, for example between cows and pigs where the structure of the skull differs considerably. Once the rod is inserted to the correct depth, the operator moves it repeatedly through the hole in the animal's skull in order to destroy the function of the nervous tissue and to render the animal's reflexes inoperative. The rod is then pushed fully into the skull such that the sealing region 14 engages with the animal's head and forms a substantially fluid tight seal therewith in order to prevent the leakage of blood and nervous tissue from the skull. In order to ensure a seal with the animal's head, the sealing element 14 needs to be sufficiently deformable to take up and match the contours of the head. The seal also serves to delimit the end of the hand portion 16 thereby providing a shoulder to limit motion of the operative's fingers towards the contaminated portion of the pithing rod.

Advantageously the rod is made of a plastic, such as HDPE, which will burn or can otherwise be handled in mechanical rendering plants.

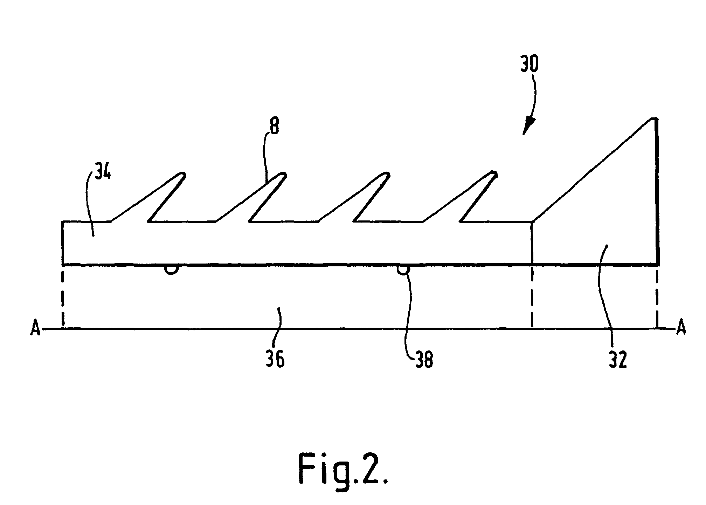

However, the invention may also be made with a pithing rod of a suitable material, for example wood, which has the correct properties to form the rod portion, but forms a poor seal. In these circumstances, a sealing and gripping portion, as shown in Figure 2, may be attached to the pithing rod prior to use.

Figure 2 shows a seal attachment 30 which is circularly symmetrical about the line A-A. Attachment 30 has a frustro-conical head 32 from which a cylindrical wall 34 extends. The wall 34 carries a plurality of fingers 8 which extend radially outward therefrom, in an inclined manner, much as described with reference to Figure 1. The cylindrical portion 34 and the head 32 define therein a passage 36 which accepts, in fluid sealed engagement, a pithing rod. A cylindrical wall 34 may also carry annular projections 38 which serve, in use, to engage corresponding annular recesses in the pithing rod so as to engage and hold the sealing portion against further motion along the shaft of the pithing rod.

It is thus possible to provide a single use pithing rod either as a single part or two part unit, which seals the animal's skull against leakage of nervous tissue and blood.

In variants of the invention, the retaining means may be provided only in the vicinity of the seal.

## Claims

1. A pithing rod, **characterised by** a seal (14, 30) for forming a substantially fluid tight seal between the rod (2) and an animal's head.

2. A pithing rod as claimed in claim 1, **characterised in that** the seal (14) comprises a region of increased radius compared to a shaft (2) of the pithing rod.

3. A pithing rod as claimed in claim 1 or 2, **characterised in that** the seal (14) comprises a tapered region, the diameter of which increases with increasing distance from a distal end (4) of the rod (2).

4. A pithing rod as claimed in claim 1, 2 or 3 **characterised in that** the seal (14) is formed of an elastomeric material.

5. A pithing rod as claimed in any one of the preceding claims, **characterised in that** the seal (14) is integrally formed with the pithing rod (4).

6. A pithing rod as claimed in any one of claims 1 to 4, **characterised in that** the seal (30) is formed as a separate item.

7. A pithing rod as claimed in any one of the preceding claims, further comprising retaining means (8) for only permitting unidirectional motion of the pithing rod with respect to the animal's head once the rod has been inserted such that the retaining means engage with the animal's skull.

8. A pithing rod as claimed in claim 7. **characterised in that** the retaining means (8) comprise a plurality of fingers or barbs which are inclined with respect to a longitudinal axis of the pithing rod (4) and which, in use, engage with the skull to prevent extraction of the rod.

9. A pithing rod as claimed in any one of the preceding claims further comprising markings (20) on a shaft (2) thereof in order to facilitate reducing the length of the shaft to fit an animal of a predetermined type.

10. A pithing rod as claimed in any one of the preceding claims, **characterised in that** a shaft (2) thereof has regions where material has been removed or grooves or notches formed in the shaft in order to facilitate breaking of the shaft at the regions.

11. A pithing rod as claimed in any one of the preceding claims further comprising a handle portion (16) formed at a proximal end (6) of the rod.

12. A pithing rod as claimed in claim 11, **characterised in that** the proximal head has a securing region (18) to facilitate lifting on the animal's head.

13. A pithing rod as claimed in any one of the preceding claims, **characterised in that** the rod is formed of a plastics that burns with little or no ashing.

14. A pithing rod as claimed in any of the preceding claims, **characterised in that** the rod is formed of high density polyethylene or polypropylene.

15. A sealing element for use with a pithing rod, the sealing element comprised by a channel (36) for accepting the shaft (2) of a pithing rod and forming a substantially fluid tight seal therewith, and an outwardly facing surface (32) for engaging with an animal's head to form a seal therewith.

16. A sealing element as claimed in claim 15, **characterised by** further comprising retaining means (8) for retaining the sealing element within an animal's head.

17. A pithing rod as claimed in any one of the preceding claims, further comprising means for identifying the rod.

## Patentansprüche

1. Schlachtstab, **gekennzeichnet durch** eine Dichtung (14, 30), die eine im wesentlichen fluiddichte Abdichtung zwischen dem Stab (2) und einem Tierkopf herstellt.

2. Schlachtstab nach Anspruch 1, **dadurch gekennzeichnet, daß** die Dichtung (14) einen Bereich aufweist, dessen Radius größer ist als der des Schaftes (2) des Schlachtstabes.

3. Schlachtstab nach Anspruch 1 oder 2, **dadurch gekennzeichnet, daß** die Dichtung (14) einen kegelförmigen Bereich umfaßt, dessen Durchmesser sich mit zunehmendem Abstand zu einem entfernten Ende (4) des Stabes (2) vergrößert.

4. Schlachtstab nach Anspruch 1, 2 oder 3, **dadurch gekennzeichnet, daß** die Dichtung (14) aus einem Elastomermaterial geformt ist.

5. Schlachtstab nach einem der vorhergehenden Ansprüche, **dadurch gekennzeichnet, daß** die Dichtung (14) einstückig mit dem Schlachtstab (4) ausgebildet ist.

6. Schlachtstab nach einem der Ansprüche 1 bis 4, **dadurch gekennzeichnet, daß** die Dichtung (30) als gesondertes Element ausgebildet ist.

7. Schlachtstab nach einem der vorhergehenden Ansprüche, wobei der Schlachtstab zusätzlich Halterungsmittel (8) umfaßt, die eine Bewegung des Schlachtstabs relativ zum Tierkopf nur in einer Richtung erlauben, sobald der Stab derart in den Kopf eingeschoben wurde, daß die Halterungsmittel mit dem Tierschädel in Eingriff stehen.

8. Schlachtstab nach Anspruch 7, **dadurch gekennzeichnet, daß** die Halterungsmittel (8) mehrere Stifte oder Stachel umfassen, die schräg zu einer Längsachse des Schlachtstabs (4) verlaufen und im Einsatz mit dem Schädel in Eingriff kommen und so ein Herausziehen des Stabes verhindern.

9. Schlachtstab nach einem der vorhergehenden Ansprüche, wobei zusätzlich am Schaft (2) des Schlachtstabes Markierungen (20) vorgesehen sind, die es erleichtern, die Länge des Schaftes derart zu reduzieren, daß sie einem Tier einer bestimmten Gattung angemessen ist.

10. Schlachtstab nach einem der vorhergehenden Ansprüche, **dadurch gekennzeichnet, daß** der Schaft (2) des Schlachtstabs Bereiche aufweist, an denen Material entfernt wurde bzw. im Schaft Nute oder Kerben ausgebildet wurden, wodurch ein Abbrechen des Schaftes an diesen Bereichen erleichtert wird.

11. Schlachtstab nach einem der vorhergehenden Ansprüche, wobei der Schlachtstab zusätzlich einen Griffbereich (16) umfaßt, der am nahen Ende (6) des Stabes ausgebildet ist.

12. Schlachtstab nach Anspruch 11, **dadurch gekennzeichnet, daß** das nahe Endstück einen Sicherungsbereich (18) aufweist, durch den sich der Tierkopf leichter anheben läßt.

13. Schlachtstab nach einem der vorhergehenden Ansprüche, **dadurch gekennzeichnet, daß** der Stab aus einem Kunststoff besteht, der mit geringer bzw. ganz ohne Aschenbildung verbrennt.

14. Schlachtstab nach einem der vorhergehenden Ansprüche, **dadurch gekennzeichnet, daß** der Stab aus einem hochdichten Polyäthylen oder Polypropylen besteht.

15. Dichtungselement, das zusammen mit einem Schlachtstab zum Einsatz kommt und einen Durchgang (36) zur Aufnahme des Schaftes (2) eines Schlachtstabs und zur Ausbildung einer im wesentlichen fluiddichten Abdichtung zusammen mit diesem Schaft sowie eine nach außen weisende Oberfläche (32) umfaßt, die mit einem Tierkopf in Eingriff kommen und dabei mit diesem Tierkopf eine Abdichtung herstellen kann.

16. Dichtungselement nach Anspruch 15, **gekennzeichnet durch** zusätzlich vorgesehene Halterungsmittel (8) zur Halterung des Dichtungselements in einem Tierkopf.

17. Schlachtstab nach einem der vorhergehenden Ansprüche, wobei der Schlachtstab zusätzlich Mittel zur Identifizierung des Stabes umfaßt.

## Revendications

1. Tige d'abattage, **caractérisée par** un dispositif d'étanchéité (14,30) formant un joint sensiblement étanche entre la partie de tige (2) et une tête d'animal.

2. Tige d'abattage selon la revendication 1, **caractérisée en ce que** le dispositif d'étanchéité (14) comprend une région de plus grand diamètre par rapport à une partie d'arbre (2) de la tige d'abattage.

3. Tige d'abattage selon la revendication 1 ou 2, **caractérisée en ce que** le dispositif d'étanchéité (14) comprend une région conique, dont le diamètre augmente lorsqu'augmente la distance depuis une extrémité distale (4) de la tige (2).

4. Tige d'abattage selon la revendication 1,2 ou 3, **caractérisée en ce que** le dispositif d'étanchéité (14) est en un matériau élastomère.

5. Tige d'abattage selon l'une quelconque des revendications précédentes, **caractérisée en ce que** le dispositif d'étanchéité (14) fait partie intégrante de la tige d'abattage (2).

6. Tige d'abattage selon l'une quelconque des revendications 1 à 4, **caractérisée en ce que** le dispositif d'étanchéité (30) en constitue une partie séparée.

7. Tige d'abattage selon l'une quelconque des revendications précédentes, comprenant de plus un moyen de retenue (8) pour permettre seulement un déplacement unidirectionnel de la tige d'abattage par rapport à la tête de l'animal, une fois que la tige a été introduite de telle façon que le moyen de retenue engage le crâne de l'animal.

8. Tige d'abattage selon la revendication 7, **caractérisée en ce que** le moyen de retenue (8) comprend plusieurs doigts ou barbelures qui sont inclinés par rapport à un axe longitudinal de la tige d'abattage (2) et qui, lors de l'utilisation, engagent le crâne pour empêcher l'extraction de la tige.

9. Tige d'abattage selon l'une quelconque des revendications précédentes, comprenant de plus des marques (20) ménagées sur sa partie d'arbre (2) afin de faciliter une réduction de la longueur de l'arbre pour l'adapter à un animal d'un type prédéterminé.

10. Tige d'abattage selon l'une quelconque des revendications précédentes, **caractérisée en ce que** sa partie d'arbre (2) présente des régions dans lesquelles de la matière a été enlevée, ou des gorges ou des encoches formées dans la partie d'arbre afin de faciliter la brisure de la partie d'arbre dans ces régions.

11. Tige d'abattage selon l'une quelconque des revendications précédentes, comprenant de plus une partie de poignée (16) formée à une extrémité proximale (6) de la tige.

12. Tige d'abattage selon la revendication 11, **caractérisée en ce que** l'extrémité proximale présente une région de préhension (18) destinée à faciliter le soulèvement de la tête de l'animal.

13. Tige d'abattage selon l'une quelconque des revendications précédentes, **caractérisée en ce que** la tige est en une matière plastique qui brûle avec peu ou pas du tout de cendres.

14. Tige d'abattage selon l'une quelconque des revendications précédentes, **caractérisée en ce que** la tige est en polyéthylène ou polypropylène haute densité.

15. Elément d'étanchéité utilisable avec une tige d'abattage, l'élément d'étanchéité comprenant un canal (36) destiné à recevoir la partie d'arbre (2) d'une tige d'abattage et formant avec celle-ci un joint sensiblement étanche aux fluides , et une surface (32) regardant vers l'extérieur et destinée à engager une tête d'animal pour former avec elle un dispositif d'étanchéité.

16. Elément d'étanchéité selon la revendication 15, **caractérisé en ce qu'**il comprend de plus un moyen de retenue (8) pour retenir l'élément d'étanchéité dans la tête d'animal.

17. Tige d'abattage selon l'une quelconque des revendications précédentes, comprenant de plus un moyen d'identification de la tige.
